# EUROPEAN PATENT SPECIFICATION

(11) **EP 3 795 747 B1**
(45) Date of publication and mention of the grant of the patent: **12.06.2024**
(21) Application number: 20196438.4
(22) Date of filing: 16.09.2020
(51) Int. Cl.: E01C 13/08, A01G 9/28, A47G 27/04

(54) **TURF EDGING STRIP**
RASENRANDSTREIFEN
BANDE DE BORDURE DE GAZON

(30) Priority: 17.09.2019 GB 201913402
(43) Date of publication of application: 24.03.2021
(73) Proprietor: Snake Edge Limited, Sheffield, South Yorkshire S12 4NB (GB)
(72) Inventor: GREEN, Robert, Sheffield, South Yorkshire S12 4NB (GB); GREEN, Beverley Jayne, Sheffield, South Yorkshire S12 4NB (GB)
(74) Representative: Swindell & Pearson Limited

(56) References cited:
- WO-A1-2020/183137
- NL-A- 6 710 298
- US-A- 2 770 002
- US-A- 5 377 447
- US-A1- 2012 276 342

## Description

### FIELD OF THE INVENTION

Embodiments of the present invention relate to an edging strip. In particular, they relate to a turf edging strip for artificial grass.

### BACKGROUND TO THE INVENTION

Some lawns comprise artificial turf (artificial grass). Artificial grass is laid down in sheets comprising a permeable base (substrate) layer supporting synthetic fibers designed to look like natural grass.

Turf edging strips are known for example from US 2012/276342 A1 and are typically used to mark the boundary of the lawn. The edging strip acts as a restraint for aggregates used in groundworks. The edging strip also provides an anchor for the edge of the sheets of artificial turf, preventing the sheets from being lifted.

A turf edging strip can be created using timber. Timber stakes are dug into the earth, and timber edging is secured to the stakes. Disadvantages of timber edging strips are that the timber can rot, and that for curved lawns the timber must be cut many times due to its inflexibility. Various commercially available alternatives replace the timber with plastic or a thin steel sheet, to increase flexibility and durability.

Available edging strips protrude above the level of the grass, which causes a trip hazard and can look unsightly.

WO 2020/183137 A1 was filed before, and published after the present application. WO '137 describes lawn edging comprising an elongate member 11. Part of the lawn edging is tucked under a pathway or paved area. Adhesive is spread onto an upwardly-facing surface of an arcuate upper wall member of the lawn edging. Artificial grass is pressed down onto the adhesive.

NL 6710298 A describes a device for fixing a carpet. The device consists of a resilient metal part, of rectangular cross-section.

### BRIEF DESCRIPTION OF VARIOUS EMBODIMENTS OF THE INVENTION

The invention is defined in the appended independent claims.

There is provided a turf edging strip for artificial turf, the turf edging strip comprising: a turf securing surface for enabling artificial turf to be secured to the turf edging strip; and one or more ground securing portions for enabling the turf edging strip to be secured to the ground, wherein the turf securing surface is configured to enable turning down of an edge of the artificial turf laid over the turf securing surface.

This provides the advantage of improved durability of the edges of a lawn of artificial turf. This is because the edges present less of a trip hazard as they are tucked down.

A further advantage is making a lawn border look more natural. The turf edging strip is concealable beneath the artificial turf, and the turned down edges of the artificial turf look more natural because one would expect natural grass to lack a sharp edge.

Further, the turf securing surface is sloped to enable the turning down of the edge of the artificial turf.

Further, the one or more ground securing portions are at a level vertically below a top of the turf securing surface.

Further, the turf securing surface is sloped downwards towards the level of the one or more ground securing portions to enable the turning down of the edge of the artificial turf.

Further, the turf securing surface slopes downwards with increasing horizontal distance from the one or more ground securing portions.

Further, the turf securing surface is a roughened surface for increasing adhesive strength between the artificial turf and the turf securing surface, when the artificial turf is secured via adhesive to the turf securing surface.

Further, the roughened surface is defined by a plurality of serrations Further, the slope of the turf securing surface comprises the plurality of lengthwise serrations.

In some, but not necessarily all examples the turf securing surface comprises a convex curve to enable, at least in part, the turning down of the edge of the artificial turf.

In some, but not necessarily all examples the convex curve has a nominal radius of curvature of at least 1.5 centimetres.

In some, but not necessarily all examples the convex curve extends over an angular distance of at least 45 degrees.

According to the invention, the turf edging strip further comprises an edging body comprising:
a horizontal exterior base surface not below the one or more ground securing portions;
a vertical exterior wall surface extending upwards from the horizontal exterior base surface; and
the turf securing surface, wherein the turf securing surface at least partially interconnects an end portion of the horizontal exterior base surface and an end portion of the vertical exterior wall surface.

In some, but not necessarily all examples at least part of the turf edging strip is hollow.

In some, but not necessarily all examples the turf edging strip comprises an internal cavity extending lengthwise between apertures.

In some, but not necessarily all examples the internal cavity has an internal cross-sectional area of at least two centimetres squared, such that the apertures and the internal cross-sectional area enable use of the turf edging strip as a conduit for cables and/or hoses.

In some, but not necessarily all examples the one or more ground securing portions are vertically offset below a top of the turf securing surface by at least two centimetres.

In some, but not necessarily all examples the one or more ground securing portions are horizontally offset from the turf securing surface.

In some, but not necessarily all examples the one or more ground securing portions extend in a horizontal direction away from the turf securing surface.

In some, but not necessarily all examples the one or more ground securing portions are a plurality of tabs arranged in a digitated pattern.

In some, but not necessarily all examples the one or more ground securing portions each comprise at least one fixing point, the at least one fixing point enabling the turf edging strip to be secured to the ground via a respective fixing. In some, but not necessarily all examples the turf edging strip comprises material having a Shore A hardness from the range 50 to less than 100.

According to various, but not necessarily all, embodiments of the invention there is provided a turf edging strip system for artificial turf, the system comprising:
the turf edging strip; and
a connector configured to engage with the turf edging strip and configured to engage with a second turf edging strip, to interconnect the turf edging strip and the second turf edging strip.

In some, but not necessarily all examples the connector is resiliently flexible.

In some, but not necessarily all examples the connector is configured as a plug and wherein the turf edging strip comprises at least one aperture providing a socket.

In some, but not necessarily all examples the aperture extends lengthwise from end-to-end of the turf edging strip to enable the turf edging strip to be cut to a desired length and still be interconnected with the second turf edging strip.

### BRIEF DESCRIPTION OF THE DRAWINGS

For a better understanding of various examples of embodiments of the present invention reference will now be made by way of example only to the accompanying drawings in which:
Fig 1 illustrates an example of a turf edging strip;
Fig 2 illustrates an example of a turf edging strip;
Fig 3 illustrates an example of a turf edging strip; and
Fig 4 illustrates an example of a turf edging strip system.

### DETAILED DESCRIPTION OF VARIOUS EMBODIMENTS OF THE INVENTION

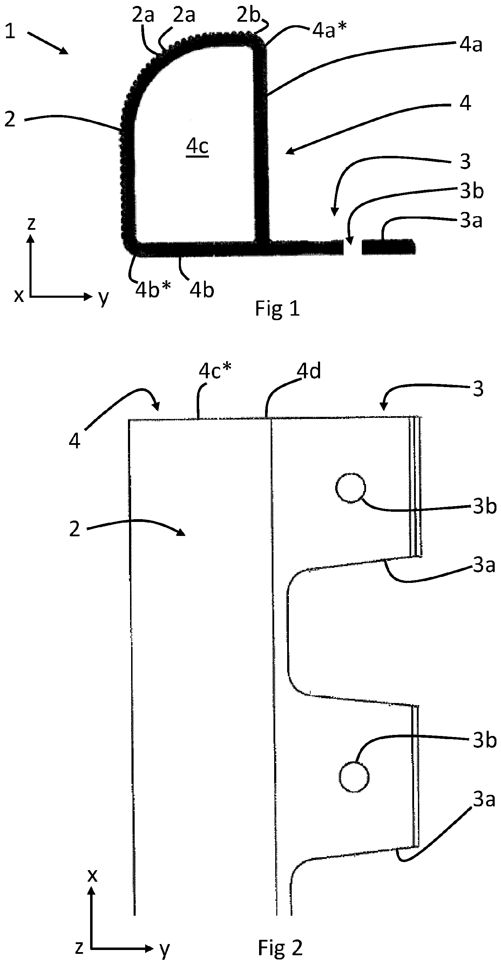

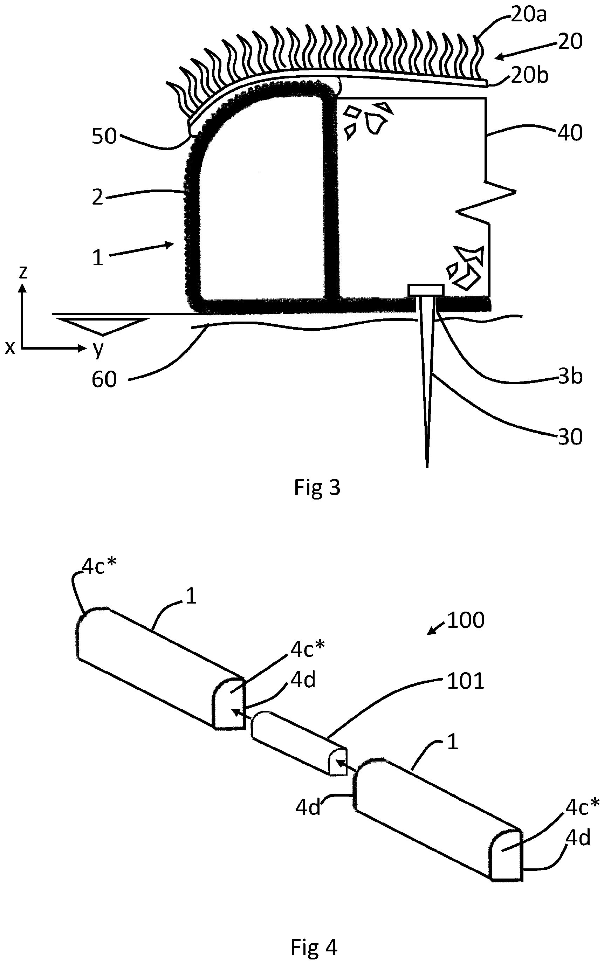

Fig 1 illustrates an example of a turf edging strip 1 in cross-section, and Fig 3 illustrates an example of the turf edging strip 1 in use. Coordinates are shown, with the x-axis representing a length direction, the y-axis representing a width direction, and the z-axis representing a vertical/height direction.

A single turf edging strip 1 may have a supplied x-axis length of one metre or more, and is relatively narrow (e.g. 1-10cm) and low (e.g. 1-10cm) compared to its length.

The illustrated turf edging strip 1 comprises an edging body 4 which may be hollow, as shown, or solid. An edging body 4 is a portion of the turf edging strip 1 that extends vertically and comprises the turf securing surface 2. The edging body 4 therefore elevates the turf securing surface 2 above base level. In an example, the edging body 4 has a height from the range 1-10cm.

The illustrated edging body 4 comprises a plurality of exterior surfaces including an approximately horizontal base surface 4b and an approximately vertical wall surface 4a. The wall surface 4a is to a first (right) side of the edging body 4 and extends upwards from the horizontal base surface 4b. In other examples, the edging body 4 may take a different shape.

The edging body 4 comprises turf securing means. In the Figures, the top of the edging body 4 comprises an exterior turf securing surface 2 for enabling the underside of a substrate 20b of the artificial turf, laid over the top of the turf edging strip 1, to be secured to the turf edging strip 1. A turf securing surface 2 is the surface to which the artificial turf is to be secured, regardless of the specific securing technique.

The securing is performed using adhesive. Fig 3 shows artificial turf 20 secured to the turf securing surface 2 using adhesive 50. A commercially available adhesive for joining two polymeric materials may be used. Once secured, the edging body 4 is concealed beneath blades of artificial grass 20a of the sheet of artificial turf 20.

The illustrated turf securing surface 2 is a roughened surface relative to the base surface 4b and wall surface 4a, to improve durability of the adhesive connection. Roughening the turf securing surface 2 to aid adhesion comprises creating lengthwise serrations 2a, 2b as shown in Fig 1. Lengthwise serrations 2a, 2b can be integrally formed for ease of manufacture, if the turf edging strip 1 is an extruded product.

In Fig 1, but not necessarily all examples, the turf securing surface 2 extends over the top and a second (left) side of the turf edging strip 1, interconnecting an end portion 4b* of the base surface 4b at the second (left) side and an end portion 4a* of the wall surface 4a at the top. The turf securing surface 2 therefore extends downwards as well as parallel to the ground, enabling the turning down of an edge of the artificial turf 20, providing the advantages described earlier. In the illustrations, the serrations 2a, 2b visibly extend over the top and the second (left) side.

It would be useful to avoid a sharp corner between the top and the first side, because artificial turf 20 cannot be bent to a tight bend radius without tearing or causing locked in stresses. Therefore, as illustrated, the turf securing surface 2 is sloped to avoid a sharp corner between the top and the first side. The slope may be formed by a convex curve as illustrated, or by a chamfer or bevel. The convex curve provides the best surface as it avoids corners. The slope comprises the serrations 2a, 2b.

The geometry of the slope depends on implementation. The illustration shows the arc or equivalent arc of the slope (e.g. convex curve) having a nominal radius of curvature of at least 25% of the width of the edging body 4, or at least 50% of the width of the edging body 4 if the edging body 4 is narrow. The width of the edging body 4 may be defined as the maximum y-axis separation between the first side (vertical wall) and the second side (left) of the edging body 4, which is equal to the y-axis length of the base surface 4b of the edging body 4.

In an implementation, the nominal radius of curvature of the convex curve is at least 1.5 centimetres, with an implementation range being approximately 1.5-2 centimetres. The angular distance of the arc or equivalent arc may be at least 45 degrees. In the illustration, the angular distance is 90 degrees.

The slope of the turf securing surface 2 may give the edging body 4 an asymmetrical shape about the z-axis. The slope of the turf securing surface 2 may have a larger radius of curvature than a slope, if any, at the corner between the wall surface 4a and the turf securing surface 2 (top right corner in Fig 1).

The slope of the turf securing surface 2 may give the edging body 4 an asymmetrical shape about the y-axis. The slope of the turf securing surface 2 may have a larger radius of curvature than a slope, if any, at the corner between the base surface 4b and the turf securing surface 2 (bottom left corner in Fig 1).

The Figures show that at least part of the edging body 4 may be hollow, comprising at least one internal cavity 4c. The internal cavity 4c increases the flexibility of the turf edging strip 1 at least about the z-axis, to make it easier to bend into the shape of a curved lawn border. The illustrated internal cavity 4c is fully enclosed in cross-section. However, in other examples the internal cavity 4c may be semi-enclosed in cross-section, like a throat.

In other examples, the internal cavity 4c may be provided but not as part of the same edging body 4 that comprises the turf securing surface 2.

In some, but not necessarily all examples the internal cavity 4c may extend lengthwise and end-to-end through the turf edging strip 1, for example if the turf edging strip 1 is an extruded product. The internal cavity 4c may be open at either end of the turf edging strip 1, via apertures 4c* (Fig 2 and Fig 4).

The internal cavity 4c and apertures 4c* may have an internal cross-section area of at least two centimetres squared. This enables use of the turf edging strip 1 as a conduit for cables and/or hoses of commonly used sizes for gardens. The internal cross-section area may be up to approximately twenty centimetres squared depending on implementation.

The internal cavity 4c may be shaped and sized to enable an object with a maximum width/diameter of up to approximately 17mm to be housed within the internal cavity 4c. In other examples, an internal cavity 4c may be an integral fluid hose and/or may comprise a permanent electrical cable with coupling interfaces at each end (not shown).

The manner in which the turf edging strip 1 is secured to the ground will now be described. The Figures show ground securing portions 3 in the form of digitated (finger-like) tabs 3a each comprising at least one fixing point 3b. The tabs 3a extend approximately horizontally from the fixing body 4a in the manner of flanges.

In the Figures, but not necessarily all examples, the tabs 3a are vertically level with, but horizontally offset from the base surface 4b of the edging body 4. The edging body 4 therefore extends no lower than the tabs 3a.

In the Figures, but not necessarily all examples, the fixing points 3b are fixing holes, enabling a fixing 30 such as a nail to be driven through a fixing point 3b to secure the turf edging strip 1 to the ground.

It would be appreciated that alternative fixing point arrangements are possible such as integral stakes extending downwards from the base surface 4b.

However, the use of a plurality of horizontally offset fixing holes 3b as shown is advantageous for ease of installation. This is because, as shown in Fig 2, a large number of uncovered and accessible fixing holes may be provided as possible fixing points 3b, for example more than two fixing points 3b per metre may be provided. This provides a degree of redundancy and choice, as a few fixing points 3b can be left unused if rocks or concrete in the ground are encountered. In an implementation, the fixing points 3b may be spaced from each other by no more than 30 centimetres.

The use of separate digitated tabs 3a for the ground securing portions 3 is also advantageous for ease of installation, as opposed to a single continuous tab. This is because the discontinuities between the tabs 3a increases the flexibility of the turf edging strip 1 during user contortion about the z-axis, for ease of installation with curved lawn borders. The discontinuities may be a few centimetres wide in the x-axis, e.g. from the range 1-25cm.

In the illustrations, the ground securing portions 3 and the turf securing surface 2 are offset to opposite lateral sides of the vertical wall surface 4a. In other words, the slope of the turf securing surface 2 may be regarded as sloping downwards with increasing horizontal distance from the ground securing portions 3. This means that the ground securing portions 3 are on the turf side of the turf edging strip 1, and will be beneath the artificial turf 20 as shown in Fig 3.

Fig 3 illustrates that the turf edging strip 1 may have sufficient height that the ground securing portions 3 may be securely buried underneath at least one aggregate layer 40 beneath the substrate 20b of the artificial turf 20, so that the fixings 30 (e.g. nails) can extend far into the denser ground for an improved foundation. The at least one aggregate layer 40 overlying the ground securing portions 3 may comprise a coarse aggregate layer (usually 50mm-100mm nominal aggregate size) and/or a fine aggregate layer (usually sand). The at least one aggregate layer 40 and the substrate 20b of the artificial turf 20 may be water-permeable.

Based on Fig 3, the turf edging strip 1 should be laid prior to applying and compacting the at least one aggregate layer 40. The turf edging strip 1 may first be positioned over a water-permeable geotextile membrane 60 and fixed to the ground via fixings 30. In Fig 3, the fixings 30 penetrate the geotextile membrane 60 and extend several centimetres (e.g. value from the range 5-30cm) into the ground. Then, the at least one aggregate layer 40 is added on the turf-facing side and is compacted. Then, the artificial grass 20 is added and secured to the turf edging strip 1.

The height of the turf edging strip 1, defined as the vertical offset between the ground securing portions 3 and the top of the turf securing surface 2, may be at least approximately two centimetres. In an implementation, the height is at least approximately 3.5 centimetres to enable a deep and secure aggregate layer 40.

In some, but not necessarily all examples, the turf edging strip 1 may be supplied in limited lengths of no more than 3 metres, to reduce shipping costs. The installer may therefore need to join multiple turf edging strips on-site. Fig 4 illustrates a turf edging strip system 100 for joining multiple turf edging strips 1. The system 100 comprises a separately provided turf edging strip connector 101, that can be engaged to the turf edging strips 1 to interconnect them. The turf edging strip system 100 is configured for the connector 101 to engage with the turf edging strip 1 at an end face 4d of the turf edging strip, and for the connector 101 to engage with the second turf edging strip 1 at an end face 4d of the second turf edging strip 1.

The connector 101 and turf edging strips 1 may be configured in a plug-socket arrangement. The connector 101 may act as the plug and the turf edging strip 1 comprises at least one aperture providing a socket. The aperture may be the above-mentioned aperture 4c* of the internal cavity 4c, or may be a separately provided socket (not shown). The aperture 4c* may be in one or both end faces 4d of the turf edging strip 1, for example if the turf edging strip 1 is an extruded product.

If the internal cavity 4c provides the socket and has a constant shape and size extending continuously from end-to-end of the turf edging strip 1, then the turf edging strip 1 can be cut to any arbitrary length while still being able to be connected. The connector 101 inserts into the sockets of the turf edging strips 1 to be joined, enabling the turf edging strips 1 to be interconnected with their end faces 4d abutting.

The connector 101 may be a friction fit, for resisting separation of the interconnected turf edging strips 1 by pulling in the x-axis. Alternatively or additionally, the connector 101 may rely on an interference (not shown).

The stiffness of the turf edging strip 1 may increase at the point of interconnection, due to the rigidity of the connector 101. This may locally reduce the available radius of curvature when flexing the turf edging strip 1 about the y-axis. Therefore, the connector 101 may comprise resiliently flexible material. The connector 101 may even be hollow.

The material of the turf edging strip 1 itself may be resiliently flexible, for edging a curved lawn border. For example, the turf edging strip 1 may comprise material having a Shore A hardness from the range approximately 50 to less than 100. Polymeric materials such as polyvinyl chloride (PVC) can be sourced with this level of flexibility. PVC can be supplied in a form suitable for extrusion, and can be supplied suitable for outdoor use. PVC is one example of a broad class of outdoor-suitable flexible polymeric materials.

Although embodiments of the present invention have been described in the preceding paragraphs with reference to various examples, it should be appreciated that modifications to the examples given can be made without departing from the scope of the invention as claimed. Alternative turf securing means may comprise, for example, a throat for receiving the substrate 20b, an interference (e.g. mechanical fixings), a friction fit, or a combination thereof.

The above turf edging strip 1 is configured to be used in the manner shown in Fig 3. However, installers may be free to connect the turf edging strip 1 in a different manner from that shown in Fig 3. For example, some installers may choose to leave the edging body 4 uncovered and protruding above the grass, without securing the artificial turf 20 to the upper turf securing surface 2. Some installers may choose to only extend the artificial turf 20 to the side of the edging body 4, and directly on top of the ground securing portions 3. Some installers may choose to lay the turf edging strip 1 from the other lateral side so that the ground securing portions 3 are on the non-turf-facing side. Some installers may choose to use the turf edging strip 1 with natural grass rather than artificial grass.

## Claims

1. A turf edging strip (1) for artificial turf (20), the turf edging strip comprising:
- an edging body (4) comprising a sloped turf securing surface (2) for enabling artificial turf to be secured to the turf edging strip; and
- one or more ground securing portions (3) for enabling the turf edging strip to be secured to a horizontal ground in such a way that the one or more ground securing portions are at a level vertically below a top of the turf securing surface, and that the securing surface (2) is sloped downwards towards the level of the one or more ground securing portions (3) with increasing horizontal distance from the one or more ground securing portions to enable turning down of an edge of the artificial turf laid over the turf securing surface;
wherein the turf securing surface (2) is a roughened surface for increasing adhesive strength between the artificial turf and the turf securing surface, when the artificial turf is secured via adhesive to the turf securing surface,
wherein the roughened surface is defined by a plurality of serrations (2a, 2b),
**characterised in that** the edging body (4) further comprises:
a horizontal exterior base surface (4b) not below the one or more ground securing portions;
a vertical exterior wall surface (4a) extending upwards from the horizontal exterior base surface;
wherein the turf securing surface at least partially interconnects an end portion (4b*) of the horizontal exterior base surface and an end portion (4a*) of the vertical exterior wall surface.

2. The turf edging strip of claim 1, wherein the turf securing surface (2) comprises a convex curve to enable, at least in part, the turning down of the edge of the artificial turf, wherein the convex curve has a nominal radius of curvature of at least 1.5 centimetres over an angular distance of at least 45 degrees.

3. The turf edging strip of any preceding claim, wherein at least part of the turf edging strip (1) is hollow.

4. The turf edging strip of claim 3, wherein the turf edging strip (1) comprises an internal cavity (4c) extending lengthwise between apertures (4c*), wherein the internal cavity (4c) has an internal cross-sectional area of at least two centimetres squared, such that the apertures (4c*) and the internal cross-sectional area enable use of the turf edging strip (1) as a conduit for cables and/or hoses

5. The turf edging strip of any preceding claim, wherein the one or more ground securing portions (3) are a plurality of tabs (3a) arranged in a digitated pattern.

6. The turf edging strip of any preceding claim, wherein the one or more ground securing portions (3) each comprise at least one fixing point (3b), the at least one fixing point enabling the turf edging strip to be secured to the ground via a respective fixing.

7. The turf edging strip of any preceding claim, comprising material having a Shore A hardness from the range 50 to less than 100.

8. A turf edging strip system (100) for artificial turf (20), the system comprising:
a turf edging strip (1) as claimed in any preceding claim; and
a connector (101) configured to engage with the turf edging strip and configured to engage with a second turf edging strip (1), to interconnect the turf edging strip and the second turf edging strip.

9. The system of claim 8, wherein the connector (101) is resiliently flexible

10. The system of claim 8 or 9, wherein the connector (101) is configured as a plug and wherein the turf edging strip comprises at least one aperture (4c*) providing a socket, wherein the aperture extends lengthwise from end-to-end of the turf edging strip (1) to enable the turf edging strip (1) to be cut to a desired length and still be interconnected with the second turf edging strip.

## Patentansprüche

1. Rasenkantenstreifen (1) für Kunstrasen (20), wobei der Rasenkantenstreifen aufweist:
- einen Kantenkörper (4), der eine geneigte Rasenbefestigungsfläche (2) aufweist, damit der Kunstrasen an dem Rasenkantenstreifen befestigbar ist; und
- einen oder mehrere Bodenbefestigungsabschnitte (3), um zu ermöglichen, dass der Rasenkantenstreifen an einem horizontalen Erdboden derart befestigt wird, dass ein oder mehrere Bodenbefestigungsabschnitte auf einem Niveau vertikal unterhalb einer Oberseite der Rasensicherungsfläche liegen, und dass die Rasensicherungsfläche (2) mit zunehmendem horizontalen Abstand von dem einen oder den mehreren Bodenbefestigungsabschnitten nach unten in Richtung des Niveaus des einen oder der mehreren Bodenbefestigungsabschnitte (3) geneigt ist, um ein Umklappen einer Kante des über die Rasensicherungsfläche gelegten Kunstrasens zu ermöglichen;
wobei die Rasenbefestigungsfläche (2) eine aufgeraute Oberfläche ist, um die Haftkraft zwischen dem Kunstrasen und der Rasenbefestigungsfläche zu erhöhen, wenn der Kunstrasen mittels Klebstoffs an der Rasenbefestigungsfläche befestigt wird,
wobei die aufgeraute Oberfläche durch eine Vielzahl von Zacken (2a, 2b) definiert ist,
**dadurch gekennzeichnet, dass** der Kantenstreifen einen Kantenkörper (4) aufweist, der ferner Folgendes aufweist
eine horizontale äußere Grundfläche (4b), die nicht unterhalb des einen oder der mehreren Erdboden-Befestigungsabschnitte liegt;
eine vertikale äußere Wandfläche (4a), die sich von der horizontalen äußeren Grundfläche nach oben erstreckt;
wobei die Rasensicherungsfläche zumindest teilweise einen Endabschnitt (4b*) der horizontalen äußeren Grundfläche und einen Endabschnitt (4a*) der vertikalen äußeren Wandfläche miteinander verbindet.

2. Rasenkantenstreifen nach Anspruch 1, **dadurch gekennzeichnet, dass** die Rasensicherungsfläche (2) eine konvexe Krümmung aufweist, um zumindest teilweise das Umklappen der Kante des Kunstrasens zu ermöglichen, wobei die konvexe Krümmung einen nominellen Krümmungsradius von mindestens 1,5 Zentimetern über einen Winkelabstand von mindestens 45 Grad aufweist.

3. Rasenkantenstreifen nach einem der vorhergehenden Ansprüche, **dadurch gekennzeichnet, dass** zumindest ein Teil des Rasenkantenstreifens (1) hohl ist.

4. Rasenkantenstreifen nach Anspruch 3, **dadurch gekennzeichnet, dass** der Rasenkantenstreifen (1) einen inneren Hohlraum (4c) aufweist, der sich in Längsrichtung zwischen Öffnungen (4c*) erstreckt, wobei der innere Hohlraum (4c) eine innere Querschnittsfläche von mindestens zwei Zentimetern im Quadrat aufweist, so dass die Öffnungen (4c*) und die innere Querschnittsfläche die Verwendung des Rasenkantenstreifens (1) als Kabel- und/oder Schlauchdurchführung ermöglichen.

5. Rasenkantenstreifen nach einem der vorhergehenden Ansprüche, **dadurch gekennzeichnet, dass** der eine oder die mehreren Bodenbefestigungsabschnitte (3) eine Mehrzahl von Laschen (3a) aufweisen, die in einem fingerartigen Muster angeordnet sind.

6. Rasenkantenstreifen nach einem der vorhergehenden Ansprüche, **dadurch gekennzeichnet, dass** der eine oder die mehreren Bodenbefestigungsabschnitte (3) jeweils mindestens einen Befestigungspunkt (3b) aufweisen, wobei der mindestens eine Befestigungspunkt die Befestigung des Rasenkantenstreifens am Erdboden über eine entsprechende Befestigung ermöglicht.

7. Rasenkantenstreifen nach einem der vorhergehenden Ansprüche, **dadurch gekennzeichnet, dass** er ein Material mit einer Shore-A-Härte im Bereich von 50 bis weniger als 100 aufweist.

8. Rasenkantenstreifensystem (100) für Kunstrasen (20), wobei das System aufweist:
einen Rasenkantenstreifen (1) nach einem der vorhergehenden Ansprüche; und
einen Verbinder (101), der so konfiguriert ist, dass er mit dem Rasenkantenstreifen in Eingriff kommt und so konfiguriert ist, dass er mit einem zweiten Rasenkantenstreifen (1) in Eingriff kommt, um den Rasenkantenstreifen und den zweiten Rasenkantenstreifen miteinander zu verbinden.

9. System nach Anspruch 8, **dadurch gekennzeichnet, dass** das Verbindungsstück (101) elastisch flexibel ist.

10. System nach Anspruch 8 oder 9, **dadurch gekennzeichnet, dass** der Verbinder (101) als Stecker ausgebildet ist und der Rasenkantenstreifen mindestens eine Öffnung (4c*) aufweist, die eine Buchse bereitstellt, wobei sich die Öffnung in Längsrichtung von Ende zu Ende des Rasenkantenstreifens (1) erstreckt, um zu ermöglichen, dass der Rasenkantenstreifen (1) auf eine gewünschte Länge geschnitten werden kann und immer noch mit dem zweiten Rasenkantenstreifen verbunden ist.

## Revendications

1. Bande de bordure de gazon (1) pour du gazon artificiel (20), la bande de bordure de gazon comportant :
- un corps de bordure (4) comportant une surface inclinée de fixation de gazon (2) pour permettre de fixer du gazon artificiel sur la bande de bordure de gazon, et
- une ou plusieurs portions de fixation au sol (3) pour permettre de fixer la bande de bordure de gazon sur un sol horizontal d'une manière telle que la ou les portions de fixation au sol sont à un niveau situé verticalement sous un dessus de la surface de fixation de gazon, et que la surface de fixation de gazon (2) est inclinée vers le bas vers le niveau de la ou des portions de fixation au sol (3) avec une distance horizontale croissante à partir de la ou des portions de fixation au sol pour permettre de rabattre un bord du gazon artificiel posé sur la surface de fixation de gazon,
dans laquelle la surface de fixation de gazon (2) est une surface rugosifiée pour augmenter l'adhérence entre le gazon artificiel et la surface de fixation de gazon, lorsque le gazon artificiel est fixé via un adhésif à la surface de fixation de gazon,
dans lequel la surface rugosifiée est définie par une pluralité de dentelures (2a, 2b),
**caractérisée en ce que** le corps de bordure (4) comporte en outre :
une surface de base extérieure horizontale (4b) non située en dessous de la ou des portions de fixation au sol,
une surface de paroi extérieure verticale (4a) s'étendant vers le haut à partir de la surface de base extérieure horizontale,
dans laquelle la surface de fixation de gazon relie mutuellement au moins partiellement une portion d'extrémité (4b*) de la surface de base extérieure horizontale et une portion d'extrémité (4a*) de la surface de paroi extérieure verticale.

2. Bande de bordure de gazon selon la revendication 1, dans laquelle la surface de fixation de gazon (2) comporte une courbe convexe pour permettre, au moins en partie, le rabattement du bord du gazon artificiel, dans laquelle la courbe convexe a un rayon de courbure nominal d'au moins 1,5 centimètre sur une distance angulaire d'au moins 45 degrés.

3. Bande de bordure de gazon selon l'une quelconque des revendications précédentes, dans laquelle au moins une partie de la bande de bordure de gazon (1) est creuse.

4. Bande de bordure de gazon selon la revendication 3, dans laquelle la bande de bordure de gazon (1) comporte :
une cavité interne (4c) s'étendant longitudinalement entre des ouvertures (4c*),
dans laquelle la cavité interne (4c) a une aire de section transversale interne d'au moins deux centimètres carré, de telle sorte que les ouvertures (4c*) et l'aire de section transversale interne permettent d'utiliser la bande de bordure de gazon (2) comme un conduit pour des câbles et/ou des tuyaux.

5. Bande de bordure de gazon selon l'une quelconque des revendications précédentes, dans laquelle la ou les portions de fixation au sol (3) sont une pluralité de languettes (3a) agencées selon un motif digité.

6. Bande de bordure de gazon selon l'une quelconque des revendications précédentes, dans laquelle la ou les portions de fixation au sol (3) comportent chacune au moins un point de fixation (3b), le au moins un point de fixation permettant de fixer la bande de bordure de gazon sur le sol via une fixation respective.

7. Bande de bordure de gazon selon l'une quelconque des revendications précédentes, comportant un matériau ayant une dureté Shore A dans la plage de 50 à moins de 100.

8. Système de bande de bordure de gazon (100) pour du gazon artificiel (20), le système comportant :
une bande de bordure de gazon (1) selon l'une quelconque des revendications précédentes, et
un élément de raccord (101) configuré pour s'engager dans la bande de bordure de gazon et configuré pour s'engager dans une seconde bande de bordure de gazon (1), pour raccorder la bande de bordure de gazon et la seconde bande de bordure de gazon.

9. Système selon la revendication 8, dans lequel l'élément de raccord (101) est élastiquement souple.

10. Système selon la revendication 8 ou 9, dans lequel l'élément de raccord (101) est configuré comme un bouchon et dans lequel la bande de bordure de gazon comporte au moins une ouverture (4c*) fournissant une prise, dans lequel l'ouverture s'étend longitudinalement d'un bout à l'autre de la bande de bordure de gazon (2) pour permettre de couper la bande de bordure de gazon (1) à une longueur voulue tout en étant encore raccordée à la seconde bande de bordure de gazon.
